# EUROPÄISCHE PATENTSCHRIFT

(11) **EP 0 732 234 B1**
(45) Veröffentlichungstag und Bekanntmachung des Hinweises auf die Patenterteilung: **27.06.2001**
(21) Anmeldenummer: 96101249.9
(22) Anmeldetag: 30.01.1996
(51) Int. Cl.: B60K 11/08

(54) **Ballistischer Grill für Sonderfahrzeuge**
Ballistic grill for special purpose vehicles
Grille balistique pour des véhicules à usage spécial

(30) Priorität: 15.03.1995 KR 9505281
(43) Veröffentlichungstag der Anmeldung: 18.09.1996
(73) Patentinhaber: Thyssen Krupp Stahl AG, 40211 Düsseldorf (DE)
(72) Erfinder: Hyung, Soo Kim, Koyang Si (KR)

(56) Entgegenhaltungen:
- DE-A- 3 135 586
- DE-A- 4 015 304
- DE-B- 1 184 675
- DE-B- 1 244 021
- US-A- 4 404 889

## Beschreibung

Die Erfindung betrifft einen ballistischen Grill für Sonderfahrzeuge gemäß dem Oberbegriff des Anspruches 1.

In der Regel sind bei Sonderfahrzeugen wie Panzerfahrzeugen die Motorräume einschließlich des Kühlsystems eingekapselt, um Funktionsstörungen zu vermeiden, die als Folge der Geschoss- bzw. Splittereindringung auftreten können. Im Normalfall wird die zur Verbrennung und Kühlung benötigte Luftmenge durch eine Einlass- und eine Auslassöffnung zu- bzw. abgeleitet. Die ballistischen Grills sollten so eingebaut werden, dass sie die Ein- und Auslassöffnungen abdecken, um somit das Eindringen eines Geschosses in den Motorraum zu verhindern.

Die Aufgabe eines ballistischen Grills ist es, bei minimiertem Gesamtsystemgewicht das Eindringen von Geschossen oder Splittern wirksam zu verhindern und die Luftkanäle zur Versorgung mit der erforderlichen Luftzu- und -abfuhr zu maximieren.

Bezüglich der Verwendung von ballistischen Grills gemäß einer bisherigen Technologie wird auf DE 37 03 716 A1 verwiesen. In dieser Druckschrift weist der Grill mehrere Profilformteile auf, die aus Baustahl hergestellt sind. Zur Abwehr von Geschossen und Splittern ist an jedem Profilformteilende zum Fahrzeuginneren hin ein ganzes oder partielles Profilteil in angewinkelter Stellung befestigt.

Da bei dieser Art von ballistischem Grill die Profilformteile und Profilteile meistens aus Stahl sind, ist es in hohem Maße möglich, dass beim Einschlagen eines Geschosses Splitter entstehen. Es besteht dann die Möglichkeit des Eindringens dieser Splitter. Ein Geschoss könnte dann bisweilen das Profilformteil durchdringen und den Motorraum erreichen.

Ferner wird auf DE 40 15 304 A1 hingewiesen. Bei diesem Stand der Technik handelt es sich um Profilformteile, bestehend aus mindestens zwei einzelnen Profilen, die einen Hohlraum bilden. Dieser Hohlraum kann mit Sandwichelementen gefüllt werden. Das obere Einzelprofil besteht aus Metall oder einer Metalllegierung mit geringerer Härte und hoher Bruchdehnung, während das untere Einzelprofil aus Metall oder einer Metalllegierung mit hoher Härte und geringerer Bruchdehnung besteht. Somit kann die kinetische Energie des Geschosses aufgenommen werden, wobei ein Geschoss, das das obere Profil durchdringt, im Hohlraum aufgefangen werden kann. Dieser Grilltyp erhöht den Schutzgrad durch Fragmentminimierung.

Das obere Profil ist dabei zwar aus einem Werkstoff mit geringerer Härte und hoher Bruchdehnung hergestellt, es ist aber im Grunde genommen aus Metall und hat eine begrenzte Stoßdämpfungs- und -schutzfähigkeit. Des Weiteren ist es schwierig, das Gewicht des Gesamtsystems zu reduzieren, da beide Einzelprofile aus Metall sind.

Aus der DE-A-1 184 675 ist eine Panzergräting (ballistischer Grill)bekannt, die aus massiven parallel zueinander angeordneten Rippen (Schutzleisten) mit fangschalenförmigen Vorsprüngen besteht, die mit einer Füllmasse ausgefüllt sind. Auch diese bekannte Panzergräting weist somit massive und damit schwere Profilleisten auf, die außerdem keine Interaktion der einzelnen Profilstähle untereinander erlauben.

Die vorliegende Erfindung erfolgte, um viele Probleme bei den bisherigen Technologien für ballistische Schutzgrills zu lösen. Hauptzweck dieser Erfindung ist es, einen ballistischen Grill für Sonderfahrzeuge bereitzustellen, welcher Geschosse und/oder Splitter wirksam abwehrt.

Ein weiterer Zweck dieser Erfindung besteht darin, durch die Bereitstellung eines ballistischen Grills mit minimiertem Gewicht zur Reduzierung des Fahrzeuggewichts beizutragen.

Ein weiterer Zweck dieser Erfindung besteht darin, einen ballistischen Grill mit zuverlässiger Funktion bereitzustellen und zu gewährleisten.

Ein weiterer Zweck dieser Erfindung besteht darin, einen ballistischen Grill bereitzustellen, welcher neben der Grundfunktion das Sonderfahrzeug vor feindlicher Radar- und Infrarot-Aufspürung schützt.
Dies wird durch einen ballistischen Grill erzielt, welcher mehrere Schutzleisten mit jeweils Teilen unterschiedlicher Materialien und Formen aufweist.

Diese Schutzleisten bestehen aus einem kinetische Energie aufnehmenden Kern, welcher von einem stoßdämpfenden äußeren Mantel völlig oder teilweise umschlossen ist, wobei die Verbindung des Kerns mit dem Mantel unlösbar ausgeführt ist.

Der Kern besteht aus Stahl oder anderen Eisenlegierungen, aus Metall, Metalllegierungen, Cermets, Keramik oder Kombinationen daraus.
Der äußere Mantel besteht aus Glasfaser, Kohlenstoff, Aramid, Polyamid, Polyester, Polyäthylen oder Hybriden dieser Materialien.

Gemäß den Charakteristiken dieser Erfindung ist der Kern von einem äußeren Mantel mit stoßdämpfenden Eigenschaften völlig oder teilweise umschlossen. Ein Geschoss, das den äußeren Mantel durchdrungen hat, wird also auf den Kern aufschlagen und Splitter verursachen, die zu einer Wölbung des äußeren Mantels führen. Alle Splitter werden also zwischen Kern und äußerem Mantel aufgefangen. Falls der Kern durchdrungen wird, wird sich der äußere Mantel auf der anderen Seite wölben und die restliche kinetische Energie des Geschosses aufnehmen. Folglich kann das Durchdringen von Geschossen und Splittern ins Innere des Fahrzeuges wirksam unterbunden werden. Des Weiteren kann das System dazu beitragen, das Gewicht des ballistischen Grills zu reduzieren, da der äußere Mantel aus leichtem Werkstoff besteht.

Gemäß einer weiteren Ausführung dieser Erfindung kann die Oberfläche des Kerns spezifische Formen haben, um die Verbindung zwischen Kern und äußerem Mantel zu verstärken.

Gemäß einer weiteren Ausführung dieser Erfindung kann zusätzliches Material auf der Oberfläche des äußeren Mantels angebracht werden, um die Tarnung gegen Radar und Infrarot zu verbessern.

Gemäß einer weiteren Ausführung dieser Erfindung besteht der äußere Mantel aus mehreren Schichten.

Beispiele und Einzelheiten dieser Erfindung werden anhand der schematischen Zeichnung näher erläutert. Für gleiche Teile werden in allen Figuren der Zeichnung gleiche Bezugszeichen verwendet. Diese sind
- 10: ballistischer Grill
- 12: Sonderfahrzeug
- 14: Kern
- 16: äußerer Mantel
- 18: kerbverzahnter Bereich
- 22: Schutzleisten
- 24: Rahmen

Es zeigt
- Fig.1: Beispiel eines Sonderfahrzeuges mit ballistischem Grill,
- Fig.2: ein Beispiel eines ballistischen Grills für Sonderfahrzeuge, teilweise vergrößert,
- Fig.3: verschiedene Querschnittsbeispiele des Grills gemäß dieser Erfindung,
- Fig.4: Querschnittszeichnung zur Darstellung der Aufnahme der kinetischen Energie des Geschosses.

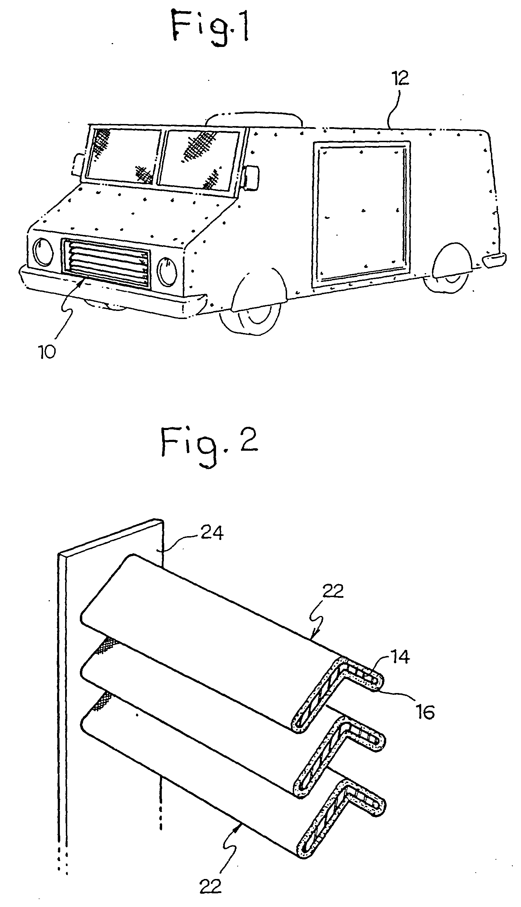

Die Fig.1 zeigt ein Beispiel eines Sonderfahrzeuges 12 mit ballistischem Grill 10. Der Motorraum des Sonderfahrzeuges 12 hat eine Einlassöffnung und eine Auslassöffnung, um die zur Verbrennung und zur Kühlung erforderliche Luft zuzuführen und um die verbrauchte Luft abzuführen.

Ballistische Grills werden auf den Einlass- und Auslassöffnungen installiert, um bei Aufrechterhaltung eines Luftkanals das Fahrzeug vor Betriebsstörungen durch das Eindringen von Geschossen oder Splittern zu schützen.

Wie aus der Fig. 2 ersichtlich ist, weist der ballistische Grill 10 gemäß dieser Erfindung mehrere Schutzleisten 22 mit Rahmen 24 auf. Zur Abwehr von Geschossen oder Splittern werden die Schutzleisten 22 unter Einhaltung eines bestimmten Abstandes zueinander in angewinkelter Stellung am Rahmen 24 befestigt. Die Schutzleiste 22 besteht jeweils aus einem kinetische Energie aufnehmenden Kern 14 und einem äußeren Mantel 16. Der äußere Mantel 16 umschließt den Kern völlig oder teilweise, und zwar unter Verwendung einer Methode der Massiv-Verbindung. Der Kern 14 besteht aus einem Werkstoff mit ausreichender Festigkeit und Härte wie zum Beispiel Stahl, Eisenlegierungen, Metall, Metalllegierung, Cermet, Keramik. Der äußere Mantel 16 besteht aus einem Werkstoff mit stoßdämpfenden und radar- und/oder infrarot-erkennungsreduzierenden Eigenschaften wie zum Beispiel Glasfaser, Kohlenstoff, Aramid, Polyamid, Polyester, Polyäthylen oder Hybriden dieser Materialien.

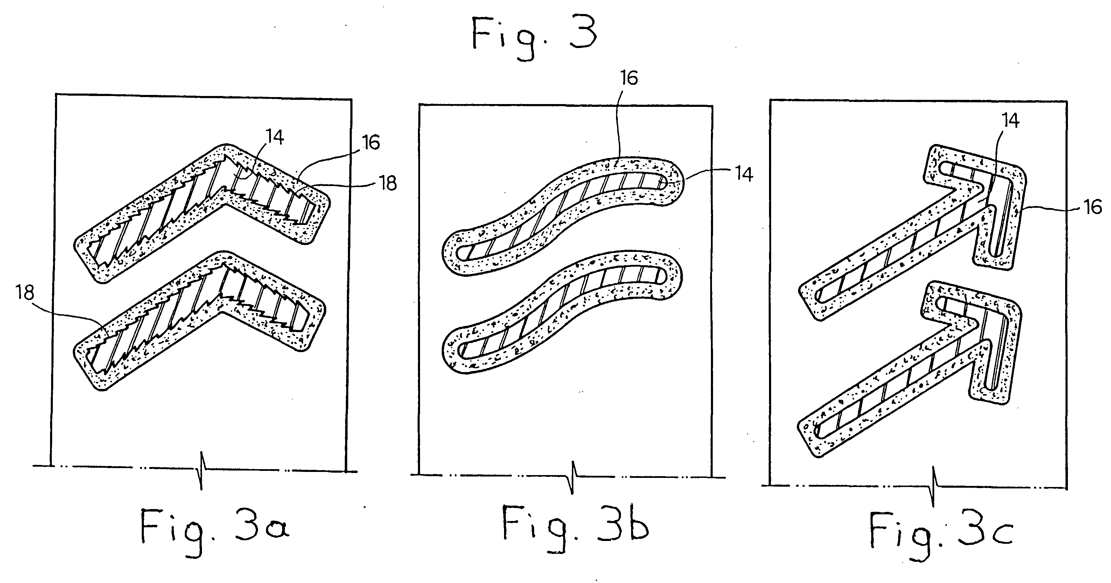

Die Fig. 3 zeigt verschiedene Formen des ballistischen Grills. Fig. 3a zeigt einen L-förmigen ballistischen Grill, Fig. 3b einen S-förmigen und Fig. 3c einen T-förmigen ballistischen Grill. Die Oberfläche des Kerns 14 kann einen kerbverzahnten Bereich 18 (Fig. 3a) aufweisen, welcher die Verbindung mit dem äußeren Mantel 16 verstärken kann. Somit kann eine Verschiebung des äußeren Mantels 16 zum Zeitpunkt eines Geschossaufpralls minimiert werden.

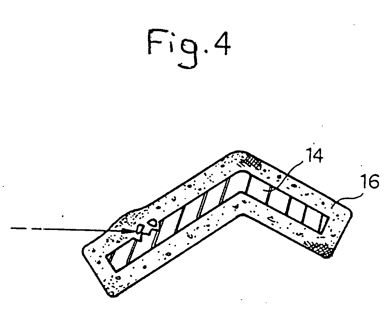

Fig. 4 zeigt schematisch den Ablauf der Aufnahme der kinetischen Energie des Geschosses durch den ballistischen Grill gemäß der Erfindung.
Da der Kern 14 aus hartem Material besteht und von einem unter anderem auch aus stoßdämpfendem Material hergestellten äußeren Mantel 16 völlig oder teilweise, was nicht dargestellt ist, umschlossen ist, wird das Geschoss den äußeren Mantel 16 ohne Splitterbildung durchdringen und auf den Kern 14 aufschlagen, der die kinetische Energie größtenteils aufnehmen wird. Nach dem Aufprall wird das Geschoss bzw. die Splitter in die äußere Richtung zurückgeworfen, so dass der äußere Mantel 16 sich wölbt und die restliche kinetische Energie aufnimmt. Das Geschoss bzw. die Splitter bleiben also zwischen dem Kern 14 und dem äußeren Mantel 16 hängen. Falls es aufgrund sehr hoher kinetischer Energie zu einer Durchdringung des Kerns 14 kommt, wird das Geschoss auf den äußeren Mantel 16 der nächsten Schutzleiste 22 aufschlagen, weil die Wölbung aufgrund der Luftspaltenbreite nicht reißen wird, bevor sie die Oberfläche des nächsten Mantels 16 berührt. Der "Abwehrvorgang" fängt dann wieder von vorne an.

Dieses Verfahren eröffnet die konstruktionsbedingte Möglichkeit, dass mehrere Schutzleisten 22 zur Aufnahme der kinetischen Energie eines Geschosses verwendet werden können, ohne Splitter zu erzeugen, die in einen Luftkanal hineinwandern könnten.
Dies bedeutet, dass man mit dieser Erfindung ballistische Schutzgrade erreichen kann, die mit allen bekannten Grillsystemen nicht zu erreichen sind.

Daher kann - wie erwähnt - das Eindringen von Geschossen und Splittern in den Motorraum wirksam unterbunden werden. Des Weiteren kann man den erforderlichen Schutz bei minimalem Systemgewicht erzielen.

## Patentansprüche

1. Ballistischer Grill für Sonderfahrzeuge mit parallel angeordneten Schutzleisten in verschiedenen Profilformen, **dadurch gekennzeichnet,** dass die Schutzleisten (22) aus einem kinetische Energie aufnehmenden Kern (14) bestehen, der von einem äußeren Mantel (16) völlig oder teilweise umschlossen ist, welcher hohe kinetische Verformung bietet, wobei die Verbindung des Kerns (14) mit dem Mantel (16) unlösbar ausgeführt ist.

2. Ballistischer Grill nach Anspruch 1, **dadurch gekennzeichnet,** dass der kinetische Energie aufnehmende Kern (14) aus Stahl und/oder anderen Eisenlegierungen, anderen Metallen und Metalllegierungen, Cermets, Hartmetallen, Keramik oder Kombinationen besteht.

3. Ballistischer Grill nach Anspruch 1, **dadurch gekennzeichnet,** dass der den Kern (14) völlig oder teilweise umschließende Mantel (16) aus Glasfaser, Kohlenstoff, Aramid, Polyamid, Polyester, Polyäthylen oder aus Hybriden dieser Materialen besteht.

4. Ballistischer Grill nach einem oder mehreren der Ansprüche 1 bis 3, **dadurch gekennzeichnet,** dass die Oberfläche des Kerns (14) kerbverzahnt oder dergleichen gestaltet ist.

5. Ballistischer Grill nach einem oder mehreren der Ansprüche 1 bis 4, **dadurch gekennzeichnet,** dass der äußere Mantel (16) an der Oberfläche mit zusätzlichen Materialien ausgestattet ist, um die Erkennung durch Radar- und/oder Infrarot-Strahlung zu verringern.

6. Ballistischer Grill nach einem oder mehreren der Ansprüche 1 bis 5, **dadurch gekennzeichnet,** dass der äußere Mantel (16) aus mehreren Schichten besteht.

## Claims

1. Ballistic grill for special-purpose vehicles comprising protection strips, disposed in a parallel manner, in different profile forms, characterised in that the protection strips (22) consist of a core (14) which absorbs kinetic energy and is surrounded fully or partially by an outer casing (16) which provides a high degree of kinetic deformation, wherein the connection of the core (14) to the casing (16) is designed in a non-releasable manner.

2. Ballistic grill according to claim 1, characterised in that the core (14) which absorbs kinetic energy consists of steel and/or other iron alloys, other metals and metal alloys, cermets, hard metals, ceramics or combinations.

3. Ballistic grill according to claim 1, characterised in that the casing (16) which surrounds the core (14) fully or partially consists of glass fibre, carbon, aramide, polyamide, polyester, polyethylene or hybrids of these materials.

4. Ballistic grill according to any one or several of the claims 1 to 3, characterised in that the surface of the core (14) is formed as a serrated edge or the like.

5. Ballistic grill according to any one or several of the claims 1 to 4, characterised in that the outer casing (16) is provided on the surface with additional materials, in order to reduce detection by radar and/or infra-red radiation.

6. Ballistic grill according to any one or several of the claims 1 to 5, characterised in that the outer casing (16) consists of several layers.

## Revendications

1. Grille balistique pour véhicules spéciaux, comportant, disposées en parallèle, des lamelles de protection présentant divers profils, caractérisée en ce que les lamelles de protection (22) sont constituées d'une âme (14) absorbant l'énergie cinétique, complètement ou partiellement entourée d'une enveloppe extérieure (16) qui présente une déformation cinétique élevée, tandis que la liaison de l'âme (14) à l'enveloppe (16) est réalisée de manière à être inséparable

2. Grille balistique selon la revendication 1, caractérisée en ce que l'âme (14) absorbant l'énergie cinétique est constituée d'acier et/ou d'autres alliages de fer, d'autres métaux et alliages métalliques, de cermets, de métaux durs, de céramique ou de combinaisons de ceux-ci.

3. Grille balistique selon la revendication 1, caractérisée en ce que l'enveloppe extérieure (16) entourant complètement ou partiellement l'âme (14) est constituée de fibres de verre, de carbone, d'aramide, de polyamide, de polyester, de polyéthylène ou d'hybrides de ces matériaux.

4. Grille balistique selon l'une ou plusieurs des revendications 1 à 3, caractérisée en ce que la surface de l'âme (14) est configurée avec des cannelures ou similaires.

5. Grille balistique selon l'une ou plusieurs des revendications 1 à 4, caractérisée en ce que l'enveloppe extérieure (16) est dotée en surface de matériaux supplémentaires pour réduire la détection par un faisceau radar et/ou infrarouge.

6. Grille balistique selon l'une ou plusieurs des revendications 1 à 5, caractérisée en ce que l'enveloppe extérieure (16) est constituée de plusieurs couches.
